# FASCICULE DE BREVET EUROPEEN

(11) **EP 0 287 487 B1**
(45) Date de publication et mention de la délivrance du brevet: **23.06.1993**
(21) Numéro de dépôt: 88440013.6
(22) Date de dépôt: 04.03.1988
(51) Int. Cl.: A01B 33/02, A01B 9/00

(54) **Machine agricole de travail du sol munie d'un rotor s'étendant obliquement par rappot à sa direction de déplacement**
Bodenbearbeitungsgerät mit quer zum Arbeitsweg rotierenden Wellen
Soil cultivating machine having a rotary shaft transverse to the direction of travel

(30) Priorité: 06.03.1987 FR 8703219
(43) Date de publication de la demande: 19.10.1988
(60) Demande divisionnaire: 92116640.1
(73) Titulaire: KUHN S.A., F-67700 Saverne (FR)
(72) Inventeur: Kirch, Michel, F-57410 Etting (FR)

(56) Documents cités:
- EP-A- 0 162 197
- EP-A- 0 188 633
- WO-A-83/04158
- WO-A-84/00465
- CH-A- 433 843
- FR-A- 1 142 295
- FR-A- 2 148 368
- GB-A- 1 192 699
- GB-A- 2 133 663
- US-A- 2 098 472
- US-A- 2 155 739
- US-A- 2 271 354
- US-A- 3 297 095
- US-A- 3 633 679

## Description

La présente invention concerne une machine agricole de travail du sol comportant un châssis et un rotor supporté par ledit châssis et dont l'axe longitudinal s'étend obliquement par rapport à la direction d'avance au travail, ledit rotor étant formé par une poutre centrale et par des outils de travail du sol fixés sur celle-ci, et étant entraîné positivement par une source motrice autour de son axe longitudinal de telle sorte qu'à sa partie frontale les outils de travail du sol se déplacent vers le sol, lesdits outils de travail du sol comportant chacun un disque bombé dont la concavité est dirigée vers l'extrémité du rotor la plus en avant compte tenu du sens d'avance au travail, et présentant à sa périphérie une pluralité d'organes de travail du sol attaquant successivement le sol à travailler, ladite machine comportant en sus des organes raclants, dont chacun collabore avec la face concave du disque bombé correspondant.

Une telle machine agricole de travail du sol est décrite dans la CH-A-433 843. Celle-ci comporte un châssis munie d'une structure d'attelage permettant, lors de l'utilisation de la machine, d'atteler celle-ci à un tracteur agricole. Le châssis a, en vue de dessus, sensiblement une forme de U ouvert vers l'arrière. Entre les extrémités arrière des branches de ce U est prévu un rotor, dont l'axe longitudinal s'étend, durant le travail, au moins sensiblement parallèlement au sol et obliquement par rapport à la direction d'avance au travail. Ce rotor est composé par une poutre centrale et par un certain nombre de disques. Chaque disque a une périphérie dentelée et est bombé de telle sorte que sa concavité soit dirigée vers l'extrémité avant du rotor. L'élément central du châssis s'étend, compte tenu du sens d'avance au travail, devant le rotor et sensiblement parallèlement et au même niveau que la poutre centrale; sur cet élément central sont fixés un certain nombre de décrotteurs, dont chacun collabore avec la face concave du disque correspondant. De cette sorte, ces décrotteurs s'étendent, compte tenu du sens d'avance au travail, devant la poutre centrale du rotor. Cette machine connue comporte enfin encore des organes de transmission couplés durant l'utilisation à la prise de force du tracteur agricole. Celle-ci entraîne ainsi positivement le rotor, via les organes de transmission, autour de l'axe longitudinal de ce dernier de telle sorte que les disques tournent dans un sens de rotation tel qu'à la partie frontale du rotor, lesdits disques se déplacent vers le sol à travailler.

Cette machine agricole de travail du sol connue présente l'avantage d'avoir un rotor entraîné positivement par une source motrice. Elle comporte, par ailleurs, des disques dont la périphérie est pourvue d'organes destinés à attaquer successivement le sol à travailler. Ceci améliore également son aptitude à pénétrer dans le sol par rapport à une machine comportant des disques circulaires.

Cette machine agricole de travail du sol connue comporte cependant aussi un certain nombre d'inconvénients.

Un premier inconvénient réside dans le fait que les organes destinés à attaquer successivement le sol à travailler sont constitués par une forme dentelée de la périphérie des disques. Or, ces disques ont en général une épaisseur nécessairement limitée. Il en découle que la périphérie des disques est soumise à une usure rapide qui diminue, au bout d'un certain temps de travail, l'efficacité des disques étant donné que la périphérie de ceux-ci tend à devenir circulaire. Ceci nécessite alors un remplacement pur et simple desdits disques.

Un deuxième inconvénient de cette machine connue réside dans le fait que le sol qui est travaillé par les disques, est retourné de manière aléatoire. En effet, la bande de terre qui a été prélevée à l'avant, est entraînée quelque peu vers le haut par la face concave du disque et doit retomber dans le sillon dans une position retournée. En pratique, il arrive cependant assez souvent qu'au lieu de retomber dans le sillon dans la position voulue, la bande de terre retourne dans le sillon telle qu'elle a été prélevée ou du moins dans une position très imparfaitement tournée.

Dans la EP-A-0 162 197 est décrite une machine agricole de travail du sol comportant un châssis et un rotor supporté par ledit châssis. L'axe longitudinal du rotor s'étend obliquement par rapport à la direction d'avance au travail. Le rotor est formé par une poutre centrale et par des outils de travail du sol fixés sur celle-ci. A cet effet, la poutre centrale comporte des flasques sur chacun desquels est fixé un outil de travail du sol correspondant.

Au travail, la machine est destinée à être attelée à un tracteur agricole et son rotor est entraîné positivement par la prise de force de celui-ci.

Chaque outil de travail du sol est formé par trois pétales qui, une fois fixés sur le flasque correspondant, constituent ni plus ni moins qu'un disque bombé, dont la concavité est dirigée vers l'extrémité du rotor la plus en avant compte tenu du sens d'avance au travail et dont la périphérie présente trois écancrures. Chaque échancrure présente un premier bord sensiblement radial et un second bord, pratiquement orthogonal au premier bord, raccordé à une partie circulaire de la périphérie du disque par un large rayon. En tournant, la surface du sol est attaquée par le rayon raccordant le deuxième bord à la partie circulaire de la périphérie du disque, puis c'est ladite partie circulaire qui doit couper la surface du sol jusqu'à ce que le rayon de raccord suivant attaque à son tour la surface du sol. Grâce à cette forme spéciale de la périphérie des disques, le lissage doit être réduit. Cependant, les disques de cette machine connue présentent la plupart des inconvénients des disques classiques ; ils favorisent la prolifération des mauvaises herbes, tendent à bourrer rapidement en terres argileuses, pulvérisent les terres battantes, pénêtrent difficilement, voire pas du tout, en terres sèches et s'usent relativement rapidement.

Du reste, dans cette machine connue, le retournement de la terre prélevée est également aléatoire.

Dans la WO-A-83/04158 est décrit un outil de charrue à disques qui se compose d'un disque central bombé à la périphérie duquel sont prévues des bêches qui sont fixées, de préférence par soudure, sur la face concave du disque, lorsque lesdites bêches sont usées, il est prévu de les désouder et de souder à leur place des nouvelles bêches. Dans une machine destinée à une utilisation légère, il est également prévu de visser et de riveter les bêches sur le disque.

Le but de la présente invention consiste à résoudre les problèmes d'une machine agricole de travail du sol, par exemple telle que celle décrite dans la CH-A-433 843.

Ce but a été atteint en dotant une machine agricole de travail du sol telle que décrite dans le préambule de la revendication 1 des caractéristiques suivantes :
(a) les organes de travail du sol, attaquant successivement le sol à travailler, sont constitués par des bêches fixées de manière démontable sur la face convexe du disque bombé correspondant et s'étendant au moins sensiblement dans le prolongement de celui-ci ;
(b) les organes raclants sont constitués par des décrotteurs-versoirs s'étendant, compte tenu du sens d'avance au travail, derrière la poutre centrale du rotor, chaque décrotteur-versoir comportant une arête raclante s'étendant en-dessous du plan horizontal passant par l'axe longitudinal du rotor, et une partie versante.

Au travail, le rotor est entraîné positivement par la source motrice et la machine est déplacée suivant la direction d'avance au travail. En tournant, les bêches de chaque outil de travail du sol du rotor attaquent successivement le sol à travailler et arrachent chacun une motte de terre. Comme l'axe longitudinal du rotor s'étend obliquement par rapport à la direction d'avance au travail, la bêche imprime à la motte arrachée un mouvement qui est dirigé transversalement à la direction d'avance au travail. La motte est ensuite reprise par la face concave du disque bombé correspondant qui va commencer à la retourner. Du fait de la présence du décrotteur-versoir, on assure que la motte soit bien décollée de la face concave du disque bombé. Mais on assure surtout qu'elle soit parfaitement retournée comme désiré. Le décrotteur-versoir parachève en effet le retournement de la motte commencé par le disque bombé.

Dans la machine agricole de travail du sol selon l'invention, l'arrachement des mottes de terre est donc réalisé par les bêches, tandis que le disque bombé n'a qu'un rôle de transport. De ce fait, ce sont principalement les bêches qui sont soumises au phénomène d'usure. L'usure du disque, quant à elle, est quasiment inéxistante. Comme les bêches sont des pièces séparées du disque, elles peuvent être remplacées lorsqu'elles sont usées. Du reste, le coût du remplacement est très limité étant donné que seules les parties usées de l'outil de travail du sol sont remplacées.

Il est également prévu, pour un bon déroulement du travail, que les bêches s'étendent au moins sensiblement dans le prolongement du disque bombé sur lequel elles sont fixées.

Il est du reste également prévu que les bêches soient fixées sur la face convexe du disque bombé correspondant. Ceci permet notamment de conserver la face concave du disque bombé parfaitement continue et sans point d'accrochage possible pour la terre et les débris végétaux qui y sont véhiculés, ce qui élimine tout risque de bourrages.

Les décrotteurs-versoirs, quant à eux, permettent d'éviter une accumulation nocive de terre qui pourrait adhérer sur la face concave des disques et éliminent les débris végétaux pouvant éventuellement être restés accrochés aux bêches. Mais ces décrotteurs-versoirs sont surtout des versoirs qui, comme dit plus haut, parachèvent le retournement de la terre arrachée par les bêches et transportée par les disques. Il est d'ailleurs prévu que l'arête raclante des décrotteurs-versoirs s'étende en-dessous du plan horizontal passant par l'axe du rotor. Cette disposition permet de commencer très tôt le parachèvement du retournement de la terre arrachée en d'en améliorer la progressivité. Ceci permet aussi de diminuer la longueur du décrotteur-versoir et de réduire en conséquence les frottements nuisibles.

Avec la machine agricole de travail du sol, les mauvaises herbes ne sont pas coupées, mais plutôt arrachées. Leur prolifération est ainsi fortement freinée, voire stoppée.

Comme les bêches attaquent l'une après l'autre la terre à travailler, il n'y a pas de formation de semelle de labour. Du reste, ceci permet également d'obtenir en terres sèches et dures une bonne pénétration car une bêche pénêtre beaucoup plus facilement dans le sol que la périphérie d'un disque continu. Cet effet de meilleure pénétration est substantiellement accentué par le fait que les outils de travail du sol sont entraînés positivement en rotation.

En terres argileuses, la présence des bêches fait que le lissage des mottes est fortement réduit voire inéxistant. En terres battantes, la machine permet de former des mottes, mais ne pulvérise pas lesdites terres. L'eau peut ainsi pénétrer dans le sol et ne provoque pas la formation de couches dures.

Le disque bombé forme par sa partie concave une surface qui facilite subtantiellement le transport de la terre arrachée par les bêches sans toutefois créer de lissage au fond du sillon qui est travaillé par les bêches.

Selon une caractéristique supplémentaire de l'invention, le diamètre extérieur d'un disque bombé a une valeur comprise entre 500 et 700 millimètres.

Selon une autre caractéristique supplémentaire de l'invention, les bêches dépassent le périmètre extérieur du disque bombé sur lequel elles sont fixées d'une distance comprise entre 50 et 125 milimètres.

Selon une autre caractéristique supplémentaire de l'invention, l'arête frontale d'une bêche forme avec une direction radiale au disque bombé et passant sensiblement par le point de l'arête frontale le plus éloigné de l'axe du rotor, un angle compris entre 0° et 45° dans le sens opposé au sens de rotation de l'outil de travail du sol.

Un angle voisin de 0° sera préféré lorsque l'on souhaite que les bêches réalisent un travail très agressif. Dans ce cas cependant, la puissance à mettre en oeuvre pour entraîner la machine sera plus importante.

Un angle s'éloignant de 0° sera préféré lorsque l'on souhaite réduire la puissance à mettre en oeuvre pour entraîner la machine. Dans ce cas en effet, la bêche aura une trajectoire relativement traînante dans le sol et sera moins agressive. Ce dernier agencement rendra également les bêches moins sensibles aux accrochages de débris végétaux étant donné que la position traînante de l'arête frontale obligera les débris végétaux à glisser le long de celle-ci sans qu'ils puissent y rester accrochés.

Un meilleur arrachement des mottes de terre est encore obtenu lorsque l'arête frontale de la partie active de la bêche est biseautée. Ce biseautage de l'arête frontale de la partie active des bêches contribue aussi à réduire la puissance absorbée et améliore la pénétration des bêches en terres extrêmement sèches et dures.

Selon une autre caractéristique supplémentaire de l'invention, l'arête supérieure d'une bêche fait avec une direction tangente au cercle de trajectoire de l'outil de travail du sol au point de l'arête frontale le plus éloigné de l'axe du rotor, un angle de détalonnage vers l'intérieur.

Cette forme de l'extrémité libre de la bêche permet d'obtenir en fonctionnement un angle entre l'arête supérieure de la bêche et le sol tel que l'on évite le talonnage de ladite bêche.

Selon une autre caractéristique supplémentaire de l'invention, au moins la partie de fixation des bêches à une forme bombée apte à s'associer avec la courbure du disque bombé.

Selon une autre caractéristique supplémentaire de l'invention, les bêches correspondantes des différents outils de travail du sol sont réparties suivant une hélice s'enroulant autour de l'axe du rotor.

Ceci procure une pénétration progressive des différents outils de travail du sol dans le sol.

Selon une autre caractérisque supplémentaire de l'invention, les bêches de chaque outil de travail du sol sont réparties de manière au moins sensiblement équidistante le long de la périphérie du disque bombé correspondant.

Selon une autre caractéristique supplémentaire de l'invention, chaque disque bombé est lié de façon démontable à un flasque correspondant solidaire de la poutre centrale du rotor. Préférentiellement, l'ouverture centrale de chaque disque bombé et la forme périphérique des flasques sont telles que dans au moins une position angulaire déterminée ledit disque bombé peut franchir les flasques.

Grâce à ce dernier agencement, chaque disque bombé pourra être réalisé d'une seule pièce ce qui lui confère une rigidité optimale, tout en pouvant être facilement monté sur et démonté de la poutre centrale du rotor.

Afin d'éviter des bourrages au niveau de l'ouverture centrale des disques, ladite ouverture de chaque disque bombé est obturée au moins partiellement par un dispositif d'obturation. Préférentiellement, le dispositif d'obturation pourra comporter au moins deux demi-rondelles interposées entre le flasque et le disque bombé qui y est fixé.

Selon une autre caractéristique supplémentaire de l'invention, la partie arrière de la partie versante d'un décrotteur-versoir forme avec un plan tangent à la courbure du disque bombé et s'appuyant sur le périmètre dudit disque bombé dans la zone du décrotteur-versoir, un angle compris entre 10° et 40°. Avantageusement cet angle est d'environ 20°.

Cet agencement permet d'obtenir un bon retournement de la terre tout en limitant au maximum la gène à l'avancement constituée par le décrotteur-versoir sur lequel glisse la terre avec une certaine pression de contact.

Afin que le passage de la terre du disque bombé sur le décrotteur-versoir correspondant se fasse dans de bonnes conditions, l'angle d'incidence de ce décrotteur-versoir par rapport audit disque bombé est avantageusement compris entre 10° et 30°. De préférence cet angle sera d'environ 20°.

Selon une autre caractéristique supplémentaire de l'invention, la partie versante du décrotteur-versoir a une longueur comprise entre 150 et 450 millimètres. Avantageusement cette longueur est d'environ 300 millimètres.

Ceci permet également de diminuer la puissance nécessaire au travail en réduisant la distance de frottement de la terre sur le décrotteur-versoir. En sus, le lissage de cette terre est également réduit.

L'invention sera parfaitement comprise grâce à la description suivante d'un exemple non limitatif de réalisation d'une machine agricole de travail du sol selon l'invention. Cette description fait référence au dessin annexé sur lequel:
- la figure 1 représente, en vue de dessus, un exemple de réalisation d'une machine selon l'invention attelée à un tracteur,
- la figure 2 représente, vue en perspective trois quarts avant, l'extrémité gauche de la machine de la figure 1,
- la figure 3 représente à une échelle agrandie une coupe du rotor suivant le plan III-III défini sur la figure 1,
- la figure 3a représente un autre exemple d'agencement des bêches,
- la figure 4 représente, à une échelle agrandie, une vue partielle du rotor avec un outil de travail du sol en coupe suivant le plan IV-IV défini sur la figure 3 et le décrotteur-versoir associé à cet outil de travail du sol, et
- La figure 5 représente, à une échelle agrandie, une vue partielle du rotor avec un outil de travail du sol en coupe suivant le plan V-V défini sur la figure 3 et le décrotteur-versoir (non représenté en coupe) associe à cet outil de travail du sol.

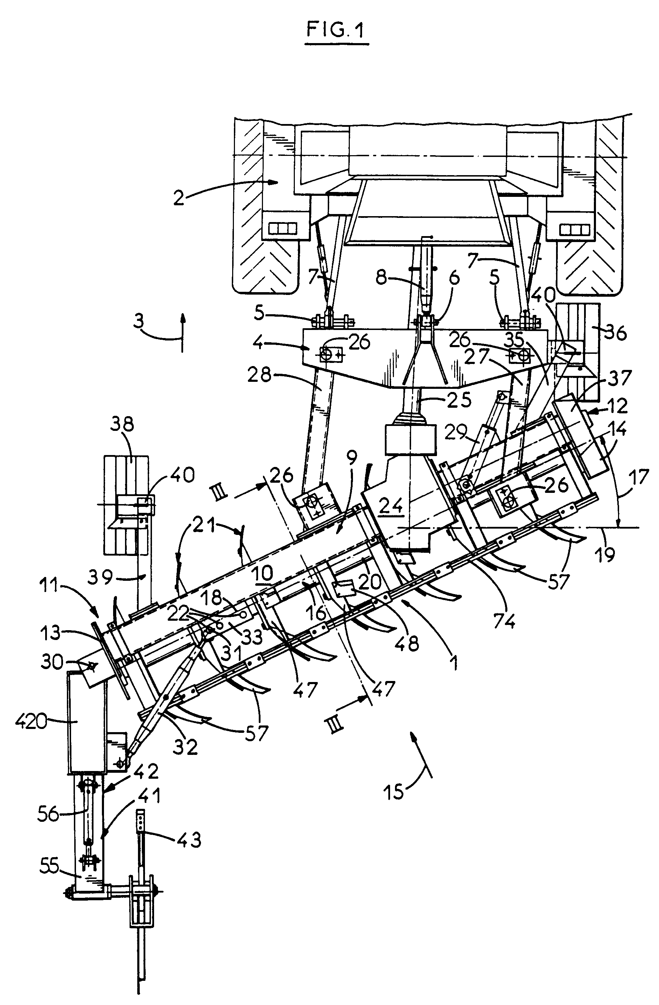

Sur la figure 1, la machine agricole de travail du sol (1) selon l'invention est attelée à un tracteur agricole (2) qui tire celle-ci dans le sens et la direction de travail (3).

A cet effet, la machine (1) est munie d'une structure d'attelage (4) qui comporte deux points d'attelage inférieurs (5) et un point d'attelage supérieur (6). Ces points d'attelage (5, 6) sont accouplés respectivement aux bras inférieurs (7) et à la bielle de poussée (8) du mécanisme d'attelage à 3 points du tracteur (2).

La partie arrière de la structure d'attelage (4) est fixée sur le châssis (9) de la machine (1). Ce châssis (9) est composé par une traverse supérieure (10) qui comporte à chacune de ses extrémités (11 , 12) une paroi latérale (13, 14) s'étendant vers le bas. Vu suivant la flèche (15) le châssis (9) a une forme de U renversé. Vu de dessus, le châssis (9) s'étend obliquement par rapport à la direction de travail (3) de telle sorte que son extrémité droite (12) soit située plus en avant que son extrémité gauche (11).

Entre les extrémités inférieures des parois latérales (13, 14) est agence un rotor (16) qui s'étend parallèlement au châssis (9), c'est-à-dire que - vu de l'arrière dans le sens de travail (3) - l'extrémité droite du rotor (16) est située plus en avant que son extrémité gauche. L'angle (17) que fait l'axe longitudinal (18) du rotor (16) avec une perpendiculaire (19) à la direction de travail (3) est préférentiellement compris entre 20° et 35°. Dans l'exemple de réalisation décrit, l'angle (17) est environ égal a 26°.

Le rotor (16) comporte une poutre centrale (20) sur laquelle sont fixés des outils de travail du sol (21). Selon l'invention, ces outils de travail du sol (21) sont chacun contitués d'un disque bombé (47), dont la concavité est dirigée vers l'extrémité droite (12) du rotor (16) qui s'étend la plus en avant, compte tenu du sens de travail (3), et de bêches (48) agencées à la périphérie dudit disque bombé (47).

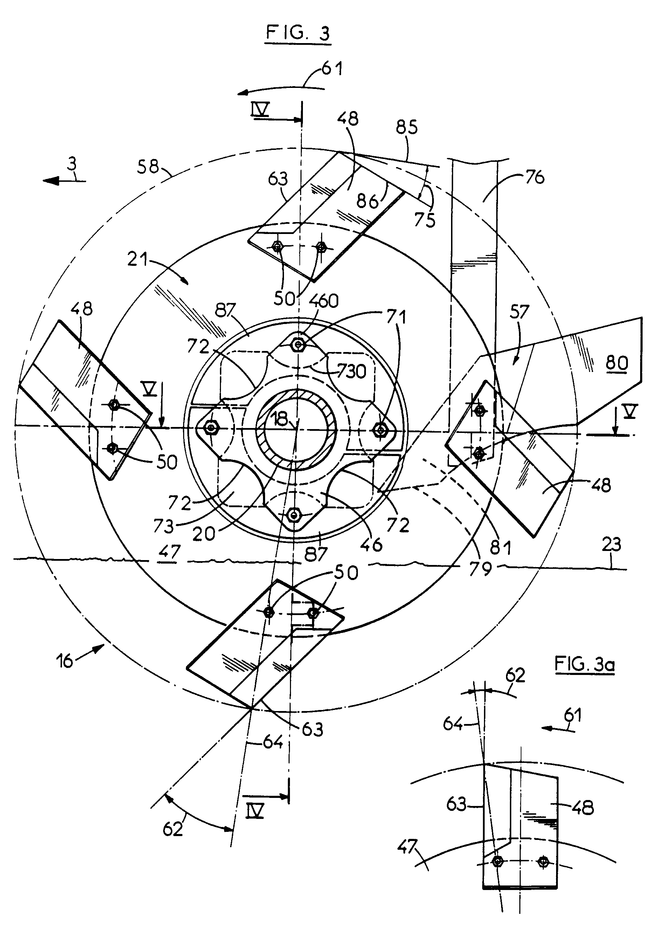

Pendant le travail, le rotor (16) est entraîné positivement en rotation autour de son axe longitudinal (18), de telle sorte que les outils de travail du sol (21) se déplacent au niveau du sol (23) de l'avant vers l'arrière (voir figure 3). A cet effet, le châssis (9) comporte sensiblement au niveau du plan longitudinal de symétrie du tracteur (2), un carter de renvoi (24) qui est réalisé sous forme de boîte de vitesses. Ce carter de renvoi (24) reçoit le mouvement de l'arbre de prise de force (non représenté) du tracteur (2) par l'intermédiaire d'un arbre de transmission à joints universels (25).

Le carter de renvoi (24) est par ailleurs lié mécaniquement avec un carter latéral (37) situé à l'extrémité droite (12) du châssis (9) et qui forme la paroi latérale (14). Le carter de renvoi (24) transmet ainsi au carter latéral (37) le mouvement rotatif reçu du tracteur (2). Ce carter latéral (37) transmet ensuite le mouvement au rotor (16) d'une façon connue de l'homme de l'art.

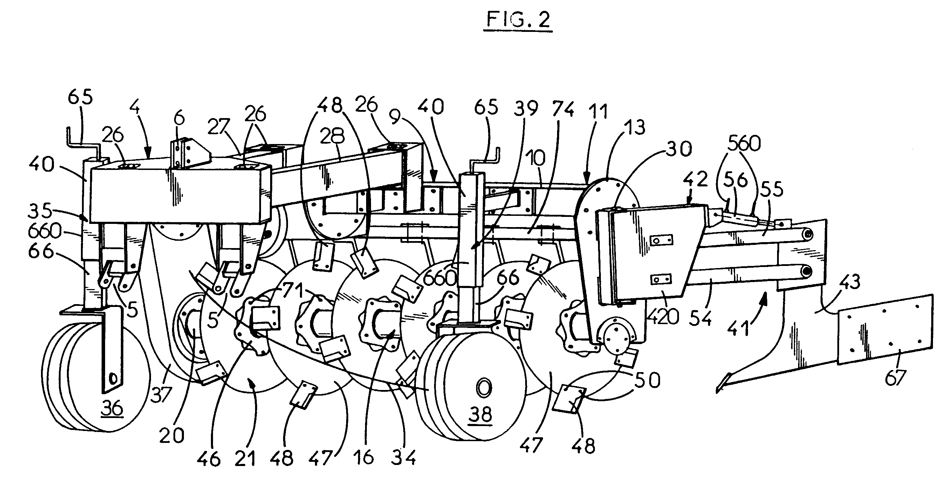

On voit encore qu'à l'avant de ses extrémités (11, 12), le châssis (9) est muni de deux roues de soutènement (36, 38) qui roulent sur le sol (23) pendant le travail. Ces roues de soutènement (36, 38) sont liées au châssis (9) au moyen de structures de support (35, 39) constituées de telle sorte que l'on puisse modifier verticalement les positions des roues (36, 38) par rapport au châssis (9) grâce à un mécanisme de réglage (40) qui est représenté plus en détail sur la figure 2.

La roue (36), située à l'extrémité droite (12) du châssis (9), s'étend devant le carter latéral (37). Durant le travail, cette roue (36) roule dans la raie.

A l'arrière de l'extrémité gauche (11) du châssis (9) est également fixé un organe de stabilisation latérale (41). Cet organe de stabilisation latérale (41) est lié au châssis (9) au moyen d'une structure support (42) qui est également vue plus en détail sur la figure 2.

L'organe de stabilisation latérale (41) est constitué par un soc (43) qui s'engage dans le sol pendant le travail.

Ledit organe de stabilisation latérale (41) absorbe l'effort transversal qui s'exerce sur le rotor (16) pendant le travail et qui est engendré par l'inclinaison dudit rotor (16).

A l'arrière de la traverse supérieure (10) du châssis (9) est fixée une poutre (74) sur laquelle sont fixés des décrotteurs-versoirs (57) associés chacun à un outil de travail du sol (21).

On remarque également sur la figure 1 que la liaison entre la structure d'attelage (4) et le châssis (9) est réalisée a l'aide de deux bielles (27, 28).

Ces deux bielles (27, 28) sont toutes les deux montées de façon articulée d'une part sur la structure d'attelage (4) et d'autre part sur la traverse (10) du châssis (9) par l'intermédiaire d'articulations (26) d'axe dirigé vers le haut. Un vérin hydraulique (29) permet de manoeuvrer le quadrilatère déformable ainsi formé par ces bielles (27, 28) (dans l'exemple décrit un parallélogramme) pour amener la machine (1) dans une position de travail (telle que représentée) ou dans la position de transport (non-représentée).

Dans la position de transport, la machine de travail du sol (1) est recentrée par rapport au plan médian du tracteur (2) de telle sorte que l'encombrement global de la machine (1) soit réduit.

Pour diminuer encore d'avantage l'encombrement latéral de la machine, on peut replier au transport l'organe de stabilisation latérale (41) derrière le rotor (16). Pour ce faire, la structure support (42) est liée au châssis (9) par une articulation (30) d'axe dirigé vers le haut.

Le verrouillage de l'organe de stabilisation latérale (41) dans ses positions de travail et dans sa position de transport s'opère en changeant la position de l'axe (31) de la bielle de maintien (32) sur la chape (33) fixée au châssis (9) qui comporte à cet effet différents trous (22) destinés à recevoir l'axe (31).

Sur les figures 2 et 3, on voit de manière plus détaillée le rotor (16) comportant la poutre centrale (20) sur laquelle sont fixés à des intervalles régulièrement espacés des flasques (46). Les flasques (46) servent à fixer les outils de travail du sol (21) sur la poutre centrale (20). Cette fixation est réalisée au moyen de quatre boulons (71).

Lesdits flasques (46) sont agencés sur la poutre centrale (20) de telle sorte que chaque outil de travail du sol (21) soit décalé angulairement autour de l'axe longitudinal (18) du rotor (16) par rapport à ses outils de travail du sol (21) adjacents. Les outils de travail du sol (21) sont, comme dit plus haut, constitués chacun d'un disque bombé (47) sur lequel est fixé un groupe de bêches (48). Dans l'exemple décrit, chaque outil de travail du sol (21) comporte quatre bêches (48) montées sur le disque (47) de manière équidistante. Les bêches (48) correspondantes de deux outils de travail du sol (21) consécutifs génèrent ainsi une hélice (34) en vue d'une pénétration progressive des différents outils de travail du sol (21) dans le sol (23).

Les bêches (48) sont fixées à leur disque bombé (47) correspondant par des vis (50).

Sur la droite de la figure 2, on voit distinctement l'agencement de l'organe de stabilisation latérale (41). Celui-ci est constitué d'un soc (43) lié à l'extrémité (11) du châssis (9) la plus en arrière par i'intermédiaire de la structure support (42). Cette structure support (42) est, comme dit plus haut, liée à la paroi latérale (13) du châssis (9) par l'intermédiaire d'une articulation (30) d'axe dirigé vers le haut, et est maintenue dans une position choisie par l'intermédiaire de la bielle de maintien (32). La structure support (42) comporte un support de stabilisation (420) à l'arrière duquel s'étendent deux barres (54, 55) qui lient le soc (43) audit support de stabilisation (420). La liaison des barres (54, 55) sur le support de stabilisation (420) et sur le soc (43) est réalisée de manière articulée de telle sorte à créer un quadrilatère déformable qui est au moins sensiblement un parallélogramme. Sur le parallèlogramme ainsi créé agit un vérin hydraulique (56) à double effet s'étendant entre le support de stabilisation (420) et la barre supérieure (55) du parallèlogramme. Ce vérin hydraulique (56) est commandé par des éléments de commande hydraulique (560).

La constitution de l'organe de stabilisation latérale (41) décrit ci-avant, permet à l'utilisateur de modifier l'intensité d'action dudit organe de stabilisation latérale (41) et ceci pendant le travail en agissant depuis la cabine de pilotage du tracteur (2) sur les éléments de commande (560) du vérin hydraulique (56). Le soc (43) comporte à l'arrière une plaque (67) conférant au soc (43) un bon pouvoir de stabilisation.

Les éléments de commande hydraulique (560) peuvent être munis d'un dispositif à déclenchement (non représenté) permettant au soc (43) de se dégager du sol (23) lorsqu'il rencontre un obstacle enfoui dans le sol (23), tel qu'une grosse pierre par exemple.

On voit encore sur la figure 2, au premier plan, les roues de soutènement (36, 38) et leur structure de support respective (35, 39) avec leur organe de réglage (40). Le réglage se fait au moyen d'une manivelle (65) solidaire d'une vis (non représentée) agissant sur un écrou (non représenté) solidaire d'un montant (66) lié à la roue (36, 38) correspondante et qui glisse dans un tube (660) correspondant lié au châssis (9).

Le réglage de la hauteur relative entre le châssis (9) et les roues (36, 38) permet de moduler à volonté la profondeur de travail des outils de travail du sol (21).

Sur les figures 3, 3a, 4 et 5, on voit bien la forme des outils de travail du sol (21) ainsi que l'agencement d'un décrotteur-versoir (57) par rapport à son outil de travail du sol (21) correspondant.

Dans l'exemple de réalisation représenté sur la figure 3, chaque bêche (48) est montée sur le disque (47) correspondant de manière à être fortement inclinée dans un sens opposé au sens de rotation (61) de l'outil de travail du sol (21). Cette inclinaison de la bêche (48) dans le sens opposé au sens de rotation (61) est telle que l'angle (62), formé par l'arête frontale (63) de la bêche (48) et une direction radiale (64) passant par l'axe (18) du rotor (16) et le point de l'arête frontale (63) le plus éloigné dudit axe (18), a une valeur comprise entre 0° (sur la figure 3a cet angle (62) est très proche de 0°) et 45°.

Du reste, l'arête frontale (63) de chaque bêche (48) est avantageusement biseautée.

Comme dit plus haut, sur chaque disque (47) sont montées quatre bêches (48) liée chacune audit disque (47) correspondant par deux vis (50). Chacune de ces bêches (48) présente un détalonnage matérialisé par l'angle (75) entre une direction (85) tangente à la trajectoire circulaire extrême (58) décrite par les bêches (48) et l'arête supérieure (86) de la bêche (48) correspondante. Cet angle (75) est dirigé vers l'intérieur de l'outil de travail du sol (21).

Sur les figures 3, 4 et 5, on voit également le mode de fixation d'un disque (47) à la poutre centrale (20) du rotor (16). Chaque disque (47) est fixé sur un flasque (46) correspondant soudé sur la poutre centrale (20), par l'intermédiaire de quatre boulons (71). Le flasque (46) a une forme périphérique spéciale. En effet, dans l'exemple représenté, le flasque est constitué par une plaque carrée sur chaque côté de laquelle on a enlevé une portion de disque (72). Le flasque (46) se présente ainsi comme une étoile à quatre branches (460). Dans chacune de ces branches (460) a été aménagé un trou de passage pour un boulon (71).

L'ouverture centrale (73) du disque (47) a une forme complémentaire de celle du flasque (46). En effet, dans l'exemple réprésenté cette ouverture centrale (73) est carrée et comporte au milieu de chaque côté du carré une portion de disque saillante (730). L'ouverture centrale (73) du disque (47) comporte ainsi quatre portions de disque saillantes (730). Dans chacune de ces portions de disque saillantes (730) a été aménagé un trou de passage pour un boulon (71).

Ces formes particulières permettent aux disques (47) de franchir dans une certaine position angulaire les flasques (46) lorsque l'on fait coïncider les deux formes et ceci dans le but d'amener un disque (47) déterminé à la hauteur du flasque (46) sur lequel il devra être fixé en enfilant ledit disque (47) sur la poutre centrale (20). Lorsque le disque (47) est arrivé au niveau du flasque (46) sur lequel il devra être monté, on fait tourner ledit disque (47) de 45° autour de son axe de façon à faire coïncider les trous de passage aménagés dans les portions de disque saillantes (730) avec les trous de passage aménagés dans les branches (460) du flasque (46).

Afin d'obturer la partie de l'ouverture centrale (73) du disque (47) non obturée par le flasque (46), on a disposé entre le disque (47) et le flasque (46) deux demi-rondelles (87). Les deux demi-rondelles (87) comportent également chacune des trous de passage pour les boulons (71).

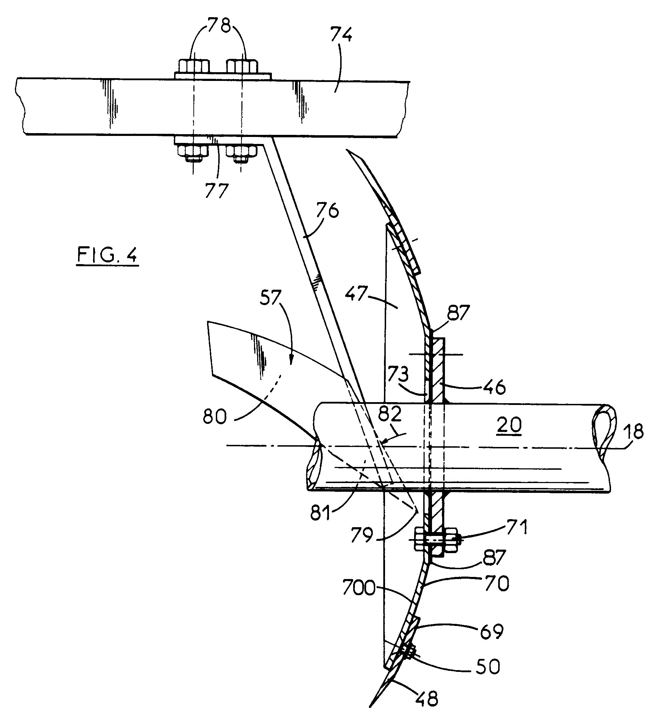

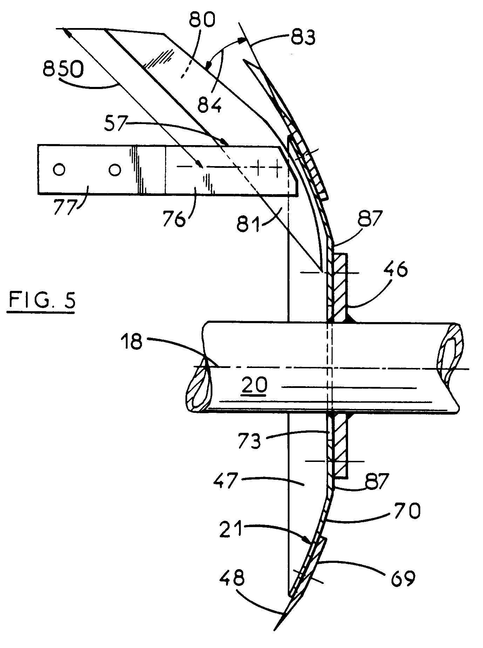

Sur les figures 4 et 5, on voit que les bêches (48) s'étendent dans le prolongement du disque (47) sur lequel elles sont fixées.

De plus, leur partie de fixation (69) est bombée de façon sensiblement identique à la convexité de la face arrière (70) des disques (47). Les bêches (48) peuvent ainsi être fixées sur la face arrière (70) de leur disque (47) correspondant. En sus, on voit sur la figure 4 que les vis (50) qui fixent de manière amovible une bêche (48) sur un disque (47), sont des vis à tête fraisée de telle sorte que la tête de la vis (50) ne dépasse pas de la face concave (700) du disque (47) sur laquelle glissent la terre et les débris végétaux arrachés par les bêches (48). La face concave (700) du disque (47) ne comporte donc aucune aspérité dans sa zone où glissent la terre et les débris végétaux. Ceci permet ainsi d'éviter le bourrage des disques (47).

Comme dit plus haut, en arrière de la traverse supérieure (10) du châssis (9) s'étend parallèlement à celle-ci la poutre arrière (74) supportant, à intervalles réguliers, les décrotteurs-versoirs (57) (voir figure 1) qui collaborent chacun avec un outil de travail du sol (21).

Ces décrotteurs-versoirs (57) sont représentés plus en détail sur les figures 3, 4 et 5.

Lesdits décrotteurs-versoirs (57) sont chacun fixés à la poutre arrière (74) par l'intermédiaire d'une patte de fixation (76) pliée dans sa partie supérieure afin de présenter une partie horizontale (77) percée de deux trous pour le passage de boulons de fixation (78) qui solidarisent cette partie horizontale (77) avec ladite poutre arrière (74).

La partie active (81) de chaque décrotteur-versoir (57) se compose de deux parties :
- une arête raclante (79) qui s'étend près de la face concave (700) du disque (47) correspondant et avantageusement plus bas que le plan horizontal contenant l'axe de rotation (18) du rotor (16), et
- une partie versante (80) comparable à un versoir de charrue.

L'arête raclante (79) du décrotteur-versoir (57) racle la terre véhiculée par l'outil de travail du sol (21), tandis que la partie versante (80) parachève le retournement de celle-ci. Comme l'arête raclante (79) s'étend en-dessous du plan horizontal contenant l'axe de rotation (18) du rotor (16), le parachèvement du retournement de la terre véhiculée commencera très tôt en vue d'une meilleure progressivité de ce retournement.

La partie active (81) du décrotteur-versoir (57) possède un angle d'incidence (82) qui permet, entre autre, à l'arête raclante (79) de bien décoller la terre véhiculée par le disque (47). Cet angle d'incidence (82) a une valeur comprise entre 10° et 30°. De préférence cet angle sera d'environ 20°.

La partie arrière de la partie versante (80) du décrotteur-versoir (57) forme avec un plan (83) tangent à la courbure du disque bombé (47) et s'appuyant sur le périmètre dudit disque (47) dans la zone du décrotteur-versoir (57), un angle (84) compris entre 10° et 40°. Préférentiellement, cet angle (84) est d'environ 20°.

En sus, la longueur (850) de cette partie est comprise entre 150 millimètres et 450 millimètres. Préférentiellement, cette longueur (850) est d'environ 300 millimètres.

La machine selon l'invention fonctionne de la manière suivante :
Au travail, la machine (1) est attelée à un tracteur (2) qui la tire dans le sens et la direction de travail (3). Simultanément, la prise de force dudit tracteur (2) entraîne en rotation le rotor (16) dans le sens de rotation (61). En tournant, les bêches (48), solidaires des disques (47), arrachent chacune une motte de terre.

Comme l'axe longitudinal (18) du rotor (16) s'étend obliquement par rapport à la direction de travail (3), la bêche (48) imprime à la motte arrachée un mouvement qui est dirigé transversalement à la direction de travail (3). La motte est ensuite reprise par la face concave (700) du disque (47) qui va commencer à la retourner. Du fait de la présence du décrotteur-versoir (57), on assure que la motte soit bien décollée de la face concave (700) du disque (47). Mais, on assure surtout qu'elle soit parfaitement retournée comme désiré. Le décrotteur-versoir (57) parachève en effet le retournement de la motte commencé par le disque (47).

Etant donné que la machine selon l'invention est entraînée en rotation positivement par une source motrice, elle est capable de travailler dans des terres très variées. En sus, la qualité du travail fourni est relativement constante.

Selon les travaux à réaliser, on pourra régler la vitesse de rotation du rotor (16), ainsi que la profondeur de travail des outils de travail du sol (21). Le réglage de la vitesse de rotation du rotor (16) sera réalisé en modifiant le régime de sortie du carter de renvoi (24), tandis que la profondeur de travail sera réglée par le mécanisme de réglage (40) des roues de soutènement (36, 38).

Différentes modifications ou améliorations peuvent être apportées à l'exemple de réalisation qui vient d'être décrit sans qu'on ne sorte pour autant du cadre de la présente invention tel que défini dans les revendications suivantes.

## Revendications

1. Machine agricole de travail du sol (1) comportant un châssis (4, 9) et un rotor (16) supporté par ledit châssis (4, 9) et dont l'axe longitudinal (18) s'étend obliquement par rapport à la direction d'avance (3) au travail, ledit rotor (16) étant formé par une poutre centrale (20) et par des outils de travail du sol (21) fixés sur celle-ci, et étant entraîné positivement par une source motrice autour de son axe longitudinal (18) de telle sorte qu'à sa partie frontale les outils de travail du sol (21) se déplacent vers le sol (23), lesdits outils de travail du sol (21) comportant chacun un disque bombé (47) dont la concavité est dirigée vers l'extrémité (12) du rotor (16) la plus en avant, compte tenu du sens d'avance (3) au travail, et présentant à sa périphérie une pluralité d'organes de travail du sol (48) attaquant successivement le sol (23) à travailler, ladite machine comportant en sus des organes raclants (57), dont chacun collabore avec la face concave (700) du disque bombé (47) correspondant, caractérisée par le fait que :
a) les organes de travail du sol (48), attaquant successivement le sol (23) à travailler, sont constitués par des bêches (48) fixées de manière démontable sur la face convexe (70) du disque bombé (47) correspondant et s'étendant au moins sensiblement dans le prolongement de celui-ci ;
b) les organes raclants (57) sont constitués par des décrotteurs-versoirs (57) s'étendant, compte tenu du sens d'avance (3) au travail, derrière la poutre centrale (20) du rotor (16), chaque décrotteur-versoir (57) comportant une arête raclante (79) s'étendant en-dessous du plan horizontal passant par l'axe longitudinal (18) du rotor (16), et une partie versante (80).

2. Machine agricole de travail du sol selon la revendication 1, caractérisée par le fait que le disque bombé (47) a un diamètre extérieur compris entre 500 et 700 millimètres.

3. Machine agricole de travail du sol selon la revendication 2, caractérisée par le fait que les bêches (48) dépassent le périmètre extérieur du disque bombé (47) sur lequel elles sont fixées, d'une distance comprise entre 50 et 125 millimètres.

4. Machine agricole de travail du sol selon l'une au moins des revendications précédentes, caractérisée par le fait que l'angle (62) formé par l'arête frontale (63) d'une bêche (48) avec une direction (64) radiale au disque bombé (47) et passant sensiblement par le point de l'arête frontale (63) le plus éloigné de l'axe (18) du rotor (16), est compris entre 0° et 45° dans le sens opposé au sens de rotation (61) de l'outil de travail du sol (21).

5. Machine agricole de travail du sol selon l'une au moins des revendications précédentes, caractérisée par le fait que l'arête supérieure (86) d'une bêche (48) fait avec une direction (85) tangente au cercle de trajectoire (58) de l'outil de travail du sol (21) au point de l'arête frontale (63) le plus éloigné de l'axe (18) du rotor (16), un angle de détalonnage (75) vers l'intérieur.

6. Machine agricole de travail du sol selon l'une au moins des revendications précédentes, caractérisée par le fait que l'arête frontale (63) d'une bêche (48) est biseautée.

7. Machine agricole de travail du sol selon l'une au moins des revendications précédentes, caractérisée par le fait qu'au moins la partie de fixation (69) des bêches (48) a une forme bombée apte à s'associer avec la courbure du disque bombé (47).

8. Machine agricole de travail du sol selon l'une au moins des revendications précédentes, caractérisée par le fait que les bêches (48) correspondantes des différents outils de travail du sol (21) sont réparties suivant une hélice (34) s'enroulant autour de l'axe (18) du rotor (16).

9. Machine agricole de travail du sol selon l'une au moins des revendications précédentes, caractérisée par le fait que les bêches (48) de chaque outil de travail du sol (21) sont réparties de manière au moins sensiblement équidistantes le long de la périphérie du disque bombé (47) correspondant.

10. Machine agricole de travail du sol selon l'une au moins des revendications précédentes, caractérisée par le fait que chaque disque bombé (47) est lié de façon démontable à un flasque (46) correspondant solidaire de la poutre centrale (20) du rotor (16).

11. Machine agricole de travail du sol selon la revendication 10, caractérisée par le fait que l'ouverture centrale (73) de chaque disque bombé (47) et la forme périphérique des flasques (46) sont telles que dans au moins une position angulaire déterminée ledit disque bombé (47) peut franchir les flasques (46).

12. Machine agricole de travail du sol selon la revendication 11, caractérisée par le fait que l'ouverture centrale (73) de chaque disque bombé (47) est obturée au moins partiellement par un dispositif d'obturation (87).

13. Machine agricole de travail du sol selon la revendication 12, caractérisée par le fait que le dispositif d'obturation comporte au moins deux demi-rondelles (87) interposées entre le flasque (46) et le disque bombé (47) qui y est fixé.

14. Machine agricole de travail du sol selon l'une au moins des revendications précédentes caractérisée par le fait que la partie arrière de la partie versante (80) du décrotteur-versoir (57) forme avec un plan tangent (83) à la courbure du disque bombé (47) et s'appuyant sur le périmètre dudit disque bombé (47) dans la zone du décrotteur-versoir (57), un angle (84) compris entre 10° et 40°.

15. Machine agricole de travail du sol selon la revendication 14, caractérisée par le fait que l'angle (84) est d'environ 20°.

16. Machine agricole de travail du sol selon l'une au moins des revendications précédentes, caractérisée par le fait que l'angle d'incidence (82) du décrotteur-versoir (57) par rapport au disque bombé (47) est compris entre 10° et 30°.

17. Machine agricole de travail du sol selon la revendication 16, caractérisée par le fait que ledit angle d'incidence (82) est d'environ 20°.

18. Machine agricole de travail du sol selon l'une au moins des revendications précédentes, caractérisée par le fait que la partie versante (80) du décrotteur-versoir (57) a une longueur (850) comprise entre 150 et 450 millimètres.

19. Machine agricole de travail du sol selon la revendication 18, caractérisée par le fait que la partie versante (80) du décrotteur-versoir (57) a une longueur (850) d'environ 300 millimètres.

## Claims

1. An agricultural soil working machine (1) comprising a frame (4, 9) and a rotor (1, 6) supported by the said frame (4, 9) and whose longitudinal axis (18) extends obliquely in relation to the direction of advance (3) in operation, the said rotor (16) being formed by a central beam (20) and by soil working tools (21) fixed on it, and being driven positively by a motor source around its longitudinal axis (18) in such a way that at its front part the soil working tools (21) are displaced towards the ground (23), the said soil working tools (21) each comprising a curved disc (47) whose concave side is directed towards the forwardmost end (12) of the rotor (16), taking account of the direction of advance (13) in operation, and having at its periphery a plurality of soil working elements (48) successively attacking the soil (23) to be worked, the said machine comprising in addition scraping elements (57), each of which works with the concave face (700) of the corresponding curved disc (47), characterised in that:
a) the soil working elements (48) successively attacking the soil to be worked (23) are made up from spades (48) removably fixed onto the convex face (70) of the corresponding curved disc (47) and extending at least approximately as extensions thereof;
b) the scraping elements (57) are constituted by scraper-mouldboards (57) extending, taking account of the direction of advance (3) during operation, behind the central beam (20) of the rotor (16), each scraper-mouldboard (57) having a scraping edge (79) extending below the horizontal plane passing through the longitudinal axis (18) of the rotor (16), and a tuning part (80).

2. An agricultural soil working machine according to claim 1, characterised in that the curved disc (47) has an external diameter of between 500 and 700 millimetres.

3. An agricultural soil working machine according to claim 2, characterised in that the spades (48) extend beyond the external periphery of the curved disc (47) onto which they are fixed, to a distance between 50 and 125 millimetres.

4. An agricultural soil working machine according to at least one of the preceding claims, characterised in that the angle (62) formed by the front edge (63) of a spade (48) with a radial direction (64) to the curved disc (47) and passing approximately through the point on the front edge (63) furthest from the axis (18) of the rotor (16) is between 0° and 45° in the direction opposed to the direction of rotation (61) of the soil working tool (21).

5. An agricultural soil working machine in accordance with at least one of the preceding claims, characterised in that the upper edge (86) of a spade (48) makes an inward relief angle (75) with a direction (85) tangential to the circular path (58) of the soil working tool (21) at the point on the front edge (63) furthest from the axis (18) of the rotor (16).

6. An agricultural soil working machine in accordance with at least one of the preceding claims, characterised in that the front edge (63) of a spade (48) is bevelled.

7. An agricultural soil working machine in accordance with at least one of the preceding claims, characterised in that at least the fixing part (69) of the spades (48) has a curved shape which can co-operate with the curvature of the curved disc (47).

8. An agricultural soil working machine in accordance with at least one of the preceding claims, characterised in that the corresponding spades (48) of the different soil working tools (21) are distributed along a helix (34) wrapped around the axis (18) of the rotor (16).

9. An agricultural soil working machine in accordance with at least one of the preceding claims, characterised in that the spades (48) of each soil working tool (21) are distributed in an approximately equidistant manner along the periphery of the corresponding curved disc (47).

10. An agricultural soil working machine in accordance with at least one of the preceding claims, characterised in that each curved disc (47) is removably connected to a corresponding plate (46) fixed to the central beam (20) of the rotor (16).

11. An agricultural soil working machine in accordance with claim 10, characterised in that the central opening (73) of each curved disc (47) and the peripheral shape of the plates (46) are such that in at least one predetermined angular position the said curved disc (47) can go past the plates (46).

12. An agricultural soil working machine in accordance with claim 11, characterised in that the central opening (73) of each curved disc (47) is at least partially closed by closing means (87).

13. An agricultural soil working machine in accordance with claim 12, characterised in that the closing means comprise at least two half-washers (87) interposed between the plate (46) and the curved disc (47) which is fixed there.

14. An agricultural soil working machine in accordance with at least one of the preceding claims, characterised in that the rear part of the turning part (80) of the scraper-mouldboard (57) forms, with a plane (83) tangential to the curvature of the curved disc (47) and resting on the perimeter of the said curved disc (47) in the area of the scraper-mouldboard (57), an angle (84) between 10° and 40°.

15. An agricultural soil working machine in accordance with claim 14, characterised in that the angle (85) is about 20°.

16. An agricultural soil working machine in accordance with at least one of the preceding claims, characterised in that the angle of incidence (82) of the scraper-mouldboard (57) in relation to the curved disc (47) is between 10° and 30°.

17. An agricultural soil working machine in accordance with claim 16, characterised in that the said angle of incidence (82) is about 20°.

18. An agricultural soil working machine in accordance with at least one of the preceding claims, characterised in that the turning part (80) of the scraper-mouldboard (57) has a length (850) between 150 and 450 millimetres.

19. An agricultural soil working machine in accordance with claim 18, characterised in that the turning part (80) of the scraper-mouldboard (57) has a length (850) of about 300 millimetres.

## Patentansprüche

1. Landwirtschaftliche Bodenbearbeitungsmaschine (1) bestehend aus einem Rahmen (4, 9) und einem von diesem Rahmen (4, 9) getragenen Rotor (16) dessen Längsachse (18) sich während der Arbeit schräg zur Fahrtrichtung (3) erstreckt, wobei dieser Rotor (16) durch einen zentralen Träger (20) und auf diesem befestigte Bodenbearbeitungswerkzeuge (21) gebildet und mittels einer Antriebsquelle um seine Längsachse (18) derart positiv angetrieben ist, dass sich die Bodenbearbeitungswerkzeuge (21) an seiner Stirnseite, zum Boden (23) hin bewegen, wobei die Bodenbearbeitungswerkzeuge (21) jeweils eine gewölbte Scheibe (47) aufweisen, deren konkavität, bezogen auf die Arbeitsrichtung (3), zum vordersten Ende (12) des Rotors (16) hin gerichtet ist, und die an ihrem Umfang mehrere Bodenbearbeitungsorgane (48) aufweist, die mit dem zu bearbeitenden Boden (23) nacheinander in Angriff kommen, und wobei diese Maschine ferner Abstreiforgane (57) aufweist ; die jeweils mit der konkaven Seite (700) der entsprechenden gewölbten Scheiben (47) zusammenarbeiten, dadurch gekennzeichnet, dass :
a) die mit dem zu bearbeitenden Boden (23) nacheinander in Angriff kommenden Bodenbearbeitungsorgane (48) durch Spaten (48) gebildet sind, die abnehmbar auf der konvexen Seite (70) der entsprechenden gewölbten Scheibe (47) befestigt sind und die sich mindestens etwa in der Verlängerung dieser erstrecken ;
b) die Abstreiforgane (57) durch Putz- und Streichbleche (57) gebildet sind, die sich, bezogen auf die Arbeitsrichtung (3), hinter dem zentralen Träger (20) des Rotors (16) erstrecken, wobei jedes Putz- und Streichblech (57) eine Abstreifkante (79), die sich unter der durch die Längsachse (18) des Rotors (16) gehenden horizontalen Ebene erstreckt, sowie einen Streichteil (80) aufweist.

2. Landwirtschaftliche Bodenbearbeitungsmaschine nach Anspruch 1, dadurch gekennzeichnet, dass die gewölbte Scheibe (47) einen Aussendurchmesser zwischen 500 und 700 Millimeter hat.

3. Landwirtschaftliche Bodenbearbeitungsmaschine nach Anspruch 2, dadurch gekennzeichnet, dass die Spaten (48) über den äusseren Umfang der gewölbten Scheibe (47), auf welcher Sie befestigt sind, mit einer Länge zwischen 50 und 125 Millimeter hinausragen.

4. Landwirtschaftliche Bodenbearbeitungsmaschine nach zumindest einem der Ansprüche 1 bis 3, dadurch gekennzeichnet, dass der Winkel (62), der durch die Vorderkante (63) eines Spatens (48) und eine etwa durch den von der Achse (18) des Rotors (16) entfernteste Punkt der Vorderkante (63) gehenden radiale Linie (64) gebildet ist, einen Wert zwischen O° und 45 ° gegen die Umlaufrichtung (61) des Bodenbearbeitungswerkzeuges (21) hat.

5. Landwirtschaftliche Bodenbearbeitungsmaschine nach zumindest einem der Ansprüche 1 bis 4, dadurch gekennzeichnet, dass die äussere Kante (86) eines Spatens (48) mit einer durch den von der Achse (18) des Rotors (16) entfernteste Punkt der Vorderkante (63) gehenden Tangente (85) zur Kreisbahn (58) des Bodenbearbeitungswerzeuges (21) einen nach innen gerichteten Hinterwinkel (75) bildet.

6. Landwirtschaftliche Bodenbearbeitungsmaschine nach zumindest einem der Ansprüche 1 bis 5, dadurch gekennzeichnet, dass die Vorderkante (63) eines Spatens (48) schneidenförmig ist.

7. Landwirtschaftliche Bodenbearbeitungsmaschine nach zumindest einem der Ansprüche 1 bis 6, dadurch gekennzeichnet, dass zumindest der Befestigungsteil (69) der Spaten (48) eine zur Krümmung der gewölbten Scheibe (47) geeignete gewölbte Form hat.

8. Landwirtschaftliche Bodenbearbeitungsmaschine nach zumindest einem der Ansprüche 1 bis 7, dadurch gekennzeichnet, dass die entsprechenden Spaten (48) der verschiedenen Bodenbearbeitungswerkzeuge (21) eine Schraubenlinie (34) bilden, die sich um die Achse (18) des Rotors (16) herumschlingt.

9. Landwirtschaftliche Bodenbearbeitungsmaschine nach zumindest einem der Ansprüche 1 bis 8, dadurch gekennzeichnet, dass die Spaten (48) jedes Bodenbearbeitungswerkzeuges (21) zumindest etwa abstandsgleich längs des Umfangs der entsprechenden gewölbten Scheibe (47) verteilt sind.

10. Landwirtschaftliche Bodenbearbeitungsmaschine nach zumindest einem der Ansprüche 1 bis 9, dadurch gekennzeichnet, dass jede gewölbte Scheibe (47) abnehmbar mit einem entsprechenden, mit dem zentralen Träger (20) des Rotors (16) befestigten Flansch (46) verbunden ist.

11. Landwirtschaftliche Bodenbearbeitungsmaschine nach Anspruch 10, dadurch gekennzeichnet, dass die zentrale Öffnung (73) jeder gewölbten Scheibe (47) und der Umfang der Flansche (46) derart geformt sind, dass in zumindest einer gegebenen Winkelstellung die gewölbte Scheibe (47) die Flansche (46) überschreiten kann.

12. Landwirtschaftliche Bodenbearbeitungsmaschine nach Anspruch 11, dadurch gekennzeichnet, dass die zentrale Öffnung (73) jeder gewölbten Scheibe (47) mittels einer Verschlussvorrichtung zumindest teilweise verschlossen ist.

13. Landwirtschaftliche Bodenbearbeitungsmaschine nach Anspruch 12, dadurch gekennzeichnet, dass die Verschlussvorrichtung zumindest zwei Halbscheiben (87) aufweist, die zwischen dem Flansch (46) und der daran befestigten gewölbten Scheibe (47) gelegt sind.

14. Landwirtschaftliche Bodenbearbeitungsmaschine nach zumindest einem der Ansprüche 1 bis 13, dadurch gekennzeichnet, dass der hintere Teil des Streichteiles (80) des Putz- und Streichbleches (57) mit der zur Krümmung der gewölbten Scheibe (47) tangierende Ebene (83), die sich im Bereich des Putz- und Streichbleches (57) an dem Umfang der gewölbten Scheibe (47) anschliesst, einen Winkel (84) zwischen 10° und 40° bildet.

15. Landwirtschaftliche Bodenbearbeitungsmaschine nach Anspruch 14, dadurch gekennzeichnet, dass der Winkel (84) einen Wert von etwa 20° hat.

16. Landwirtschaftliche Bodenbearbeitungsmaschine nach zumindest einem der Ansprüche 1 bis 15, dadurch gekennzeichnet, dass der Anstellwinkel (82) des Putz- und Streichbleches (57) gegenüber der gewölbten Scheibe (47) zwischen 10° und 30° liegt.

17. Landwirtschaftliche Bodenbearbeitungsmaschine nach Anspruch 16, dadurch gekennzeichnet, dass der Anstellwinkel (82) einen Wert von etwa 20° hat.

18. Landwirtschaftliche Bodenbearbeitungsmaschine nach zumindest einem der Ansprüche 1 bis 17, dadurch gekennzeichnet, dass der Streichteil (80) des Putz- und Streichbleches (57) eine Länge (850) zwischen 150 und 450 Millimeter hat.

19. Landwirtschaftliche Bodenbearbeitungsmaschine nach Anspruch 18, dadurch gekennzeichnet, dass der Streichteil (80) des Putz- und Streichbleches (57) eine Länge (850) von etwa 300 Millimeter hat.
